# EUROPÄISCHE PATENTANMELDUNG

(11) **EP 4 549 101 A1**
(43) Veröffentlichungstag der Anmeldung: **07.05.2025**
(21) Anmeldenummer: 23208034.1
(22) Anmeldetag: 06.11.2023
(51) Int. Cl.: B25J 9/16

(54) **VERFAHREN ZUR AUSFÜHRUNG EINER BAUARBEIT MIT EINEM BAUROBOTER SOWIE BAUROBOTER**

(71) Anmelder: Hilti Aktiengesellschaft, 9494 Schaan (LI)
(72) Erfinder: Blass, Lukas, 8032 Zürich (CH); Lukic, Sasha, 9470 Buchs (CH); Melchior, Benny, 7013 Domat/Ems (CH); Marzinotto, Alejandro, 9466 Sennwald (CH)
(74) Vertreter: Hilti Aktiengesellschaft Corporate Intellectual Property

(57) **Zusammenfassung**

Die Erfindung betrifft ein Verfahren (1000) zur Ausführung einer Bauarbeit an einer Arbeitsposition (36) an einer Wand (32), einer Decke oder einem Boden durch einen Bauroboter (10), umfassend die Phasen (1000, 1010, 1020, 1030, 1040, 1050):
- Lokalisieren einer Arbeitsposition (36), wobei dazu eine Kamera (24) im Wesentlichen senkrecht, insbesondere mit einem Sichtwinkel (alpha) von 70 bis 110 Grad, über der Arbeitsposition (36) oder zumindest über einer zur Arbeitsposition (36) korrespondierenden, erwarteten Arbeitsposition (36) positioniert wird,
- Aufnehmen wenigstens einer Bildaufnahme der Arbeitsposition (36) durch die Kamera (24),
- Bewegen wenigstens eines Elements aus einer Gruppe gebildet aus einer Werkzeugmaschine (22), einem Werkzeug (44) und / oder einem Verbrauchsmaterial an die Arbeitsposition (36) und
- Ausführen der Bauarbeit an der Arbeitsposition (36) unter Verwendung des Elements. Die Erfindung betrifft des Weiteren einen Bauroboter (10). Sie ermöglicht es, Bauarbeiten kostengünstig und an besonders präzise lokalisierten Arbeitspositionen (36) auszuführen.

## Beschreibung

Die Erfindung geht aus von einem Verfahren zur Ausführung einer Bauarbeit an einer Arbeitsposition an einer Wand, einer Decke oder einem Boden durch einen Bauroboter.

Bei einer Vielzahl von Bauarbeiten ist es erforderlich, eine bestimmte Arbeitsposition möglichst präzise zu erreichen und eine gewünschte Bauarbeit an dieser Arbeitsposition auszuführen.

Dabei gewinnen Bauroboter immer stärker an Bedeutung, damit Bauarbeiter seltener belastenden oder gefährlichen Situationen ausgesetzt sind.

Bei Installationsarbeiten ist es beispielsweise häufig erforderlich, einen Anker in ein gebohrtes Bohrloch zu setzen. In diesem Beispiel ist somit eine Arbeitsposition, nämlich die Position des Bohrloches, bekannt. Es gilt nun, den Anker möglichst präzise in das Bohrloch einzusetzen und anschließend in dem Bohrloch zu verankern.

Dazu ist eine besonders hohe Präzision erforderlich. Bei Bauarbeiten in Beton ist beispielsweise eine Präzision im Bereich von 5 mm oder weniger, beispielsweise von 1 mm oder weniger, erforderlich, damit während des Setzvorganges weder der Anker noch das Bohrloch beschädigt werden. Dies ist auch erforderlich, um sicherstellen zu können, dass der Anker später jeweils gewünschte Mindesthaltekräfte aufbringen kann, für die er zertifiziert ist.

Eine besondere Schwierigkeit ergibt sich bei Baurobotern mit besonders weiten Reichweiten, beispielsweise bei Baurobotern mit Roboterarm mit einer maximalen Reichweite von 2 m oder mehr. Bei solchen Baurobotern ist mit Drifteffekten oder allgemein Stellungenauigkeiten zu rechnen, die deutlich oberhalb der geforderten Präzision liegen können. Müssen Verbrauchsmaterialien aufgenommen oder Werkzeuge oder Werkzeugmaschinen eingerichtet werden, können sich zusätzliche Positionierungsfehler ergeben. Ferner können Umgebungstemperaturen oder sonstige Umwelteinflüsse die Stellgenauigkeit ebenfalls beeinflussen. In Extremfällen können Bauarbeiten nicht mehr ausgeführt werden. Im Beispiel des Setzens eines Ankers kann es beispielsweise dazu kommen, dass der Anker das eigentlich angepeilte Bohrloch vollkommen verfehlt und auf eine angrenzende Wandfläche trifft.

Aufgabe der vorliegenden Erfindung ist es daher, ein kostengünstiges Verfahren sowie einen Bauroboter anzubieten, der Bauarbeiten mit einer besonders hohen Präzision an einer bestimmten Arbeitsposition ausführen kann.

Gelöst wird die Aufgabe zunächst durch ein **Verfahren** zur Ausführung einer Bauarbeit an einer Arbeitsposition an einer Wand, einer Decke oder einem Boden durch einen Bauroboter, wobei das Verfahren die Phasen umfasst:
- Lokalisieren einer Arbeitsposition, wobei dazu eine Kamera im Wesentlichen senkrecht, insbesondere mit einem Sichtwinkel von 70 bis 110 Grad, besonders bevorzugt von 80 bis 100 Grad, über der Arbeitsposition oder zumindest über einer zur Arbeitsposition korrespondierenden, erwarteten Arbeitsposition positioniert wird,
- Aufnehmen wenigstens einer Bildaufnahme der Arbeitsposition durch die Kamera,
- Bewegen wenigstens eines Elements aus einer Gruppe gebildet aus einer Werkzeugmaschine, einem Werkzeug und / oder einem Verbrauchsmaterial an die Arbeitsposition und
- Ausführen der Bauarbeit mit dem Werkzeug an der Arbeitsposition.

Dem Verfahren liegt unter anderem die Erkenntnis zugrunde, dass zum Auffinden und insbesondere zum Lokalisieren der Arbeitsposition es möglich ist, mit der senkrecht oder zumindest im Wesentlichen senkrecht ausgerichteten Kamera die Arbeitsposition besonders präzise zu lokalisieren.

Wenn sich die Kamera in einem bekannten Versatz zu dem Element befindet, kann auch das Werkzeug sehr präzise lokalisiert und damit auch positioniert werden. Es bedarf nicht mehr beispielsweise eines besonders steifen und damit sehr teuren und schweren Roboterarms. Dadurch kann das Verfahren besonders kostengünstig zu einer hohen, insbesondere ausreichend hohen Präzision führen.

Dabei wird auch berücksichtigt, dass Schrägaufnahmen der Arbeitsposition oder der erwarteten Arbeitsposition eine hinreichend präzise Lokalisierung der Arbeitsposition in der Regel erschweren. Idealerweise steht die Kamera senkrecht über der Arbeitsposition. Geringe Abweichungen, solange die Kamera noch im Wesentlichen senkrecht über der Arbeitsposition positioniert ist, können allerdings noch akzeptabel sein.

Unter der erwarteten Arbeitsposition kann eine Position verstanden werden, die im Voraus berechnet ist. Sie kann einer Messung entstammen, die beispielsweise während einer vorausgehenden Ausführung einer anderen Bauarbeit erfolgt ist. Beispielsweise kann die erwartete Arbeitsposition einer gemessenen Position entsprechend, an der zuvor das Bohrloch gebohrt worden ist. Die erwartete Arbeitsposition kann auch auf Basis einer CAD-Zeichnung, insbesondere einer Building Information Model- (BIM-) Planung, ermittelt sein.

Eine besondere Schwierigkeit bei der Ausführung von Bauarbeiten auf einer Baustelle ergibt sich oftmals durch Staub und Schmutz. Daher ist es vorteilhaft, wenn die Kamera oder ein Teil der Kamera, insbesondere ein Schutzgehäuse, gereinigt wird. Unter einem Schutzgehäuse kann ein, von einem Kameragehäuse der Kamera, in dem elektronische, mechanische und/oder optische Komponenten der Kamera untergebracht sind, verschiedenes Gehäuse verstanden werden. Das Schutzgehäuse kann zumindest teilweise transparent sein.

Um unterschiedlichen Aufnahmesituationen Rechnung zu tragen, kann eine Beleuchtungsvorrichtung zur Beleuchtung der Arbeitsposition oder der erwarteten Arbeitsposition vorgesehen sein. Die Beleuchtungsvorrichtung kann die Arbeitsposition oder die erwartete Arbeitsposition unter einem vom Sichtwinkel der Kamera verschiedenen Beleuchtungswinkel, insbesondere mit einem Beleuchtungswinkel unter 70 Grad, insbesondere von höchstens 60 Grad, beleuchten. Es hat sich nämlich für viele Arten von Bauarbeiten gezeigt, dass es besonders vorteilhaft ist, wenn das Licht auf die Arbeitsposition oder die erwartete Arbeitsposition nicht im Wesentlichen senkrecht, sondern schräg gestrahlt wird. Beispielsweise bei Bohrlöchern kann dies zu einem besseren Kontrast führen. Konturen der Arbeitsposition, beispielsweise des Bohrlochs, können präzise ermittelt und lokalisiert werden.

Die aufgenommene Bildaufnahme kann maschinell ausgewertet werden. Besonders bewährt hat sich dabei, wenn die Bildaufnahme mit Hilfe einer deterministischen Bildverarbeitungslogik ausgewertet wird. Unter einer deterministischen Bildverarbeitungslogik kann eine Auswertung auf Basis von Algorithmen verstanden werden, die keinen Maschinenlerner wie beispielsweise ein neuronales Netz oder dergleichen verwenden. Es hat sich gezeigt, dass derartige deterministische Bildverarbeitungslogiken in der Regel eine genauere Lokalisierung von Arbeitspositionen ermöglichen.

Denkbar ist jedoch, insbesondere zur Validierung identifizierter Arbeitspositionen, dass die Bildaufnahme mit Hilfe eines Maschinenlerners, beispielsweise eines neuronalen Netzes oder einer Deep Learning-Struktur, ausgewertet wird. So kann validiert werden, ob tatsächlich eine Arbeitsposition und nicht beispielsweise ein Störobjekt durch die deterministische Bildverarbeitungslogik lokalisiert worden ist. Bei Bauarbeiten, die eine geringere Lokalisierungsgenauigkeit erfordern, ist auch denkbar, auch oder alternativ die Lokalisierung der Arbeitsposition mit Hilfe des Maschinenlerners durchzuführen.

Um auch über eine Vielzahl von Arbeitspositionen hinweg eine hinreichende Präzision der Lokalisierungen aufrechterhalten zu können, kann ein Versatz zwischen der Kamera und dem Element, insbesondere regelmäßig nach einer bestimmten Mindest- oder Höchstanzahl von bearbeiteten Arbeitspositionen, kalibriert werden. Dabei ist insbesondere denkbar, dass der Bauroboter sich selbst kalibriert. Zur Kalibrierung kann eine gut lokalisierbare Position zunächst mit dem Werkzeug angefahren werden. Beispielsweise kann, wenn das Werkzeug eine Stecknuss ist, die Stecknuss senkrecht über der bekannten Position positioniert werden. Anschließend wird die Kamera so lange bewegt, bis eine von ihr aufgenommene Bildaufnahme indiziert, dass nun auch die Kamera senkrecht über der bekannten Position steht. Aus dem dazwischen zurückgelegten Weg kann dann auf den tatsächlichen Versatz des Werkzeugs zur Kamera geschlossen werden.

Damit möglichst wenig Störeffekte auf den Versatz Einfluss nehmen können, ist es vorteilhaft, wenn die Kamera und das Werkzeug oder zumindest eine Werkzeugmaschine, an der das Werkzeug angeordnet ist, starr miteinander verbunden sind. Insbesondere können sich beide am Endeffektor befinden. Sie können einen möglichst geringen Abstand voneinander aufweisen. Beispielsweise können sie weniger als 30 Zentimeter voneinander entfernt angeordnet sein.

Um auch temporäre Effekte, beispielsweise aufgrund von sich ändernden Umgebungsbedingungen beispielsweise Temperaturunterschieden, Rechnung zu tragen, ist es besonders vorteilhaft, wenn eine solche Kalibrierung regelmäßig durchgeführt wird. Beispielsweise kann sie jeweils nach einer bestimmten Mindest- oder Höchstanzahl von bearbeiteten Arbeitspositionen durchgeführt werden.

In den Rahmen der Erfindung fällt des Weiteren ein **Bauroboter** zur Ausführung von Bauarbeiten, beispielsweise auf einer Hochbau-Baustelle oder einer Tiefbau-Baustelle, umfassend eine Fahrplattform sowie einen an der Fahrplattform angeordneten Roboterarm, wobei der Roboterarm einen Endeffektor aufweist, an dem eine Werkzeugmaschine mit einem Werkzeug und / oder einem Verbrauchsmaterial angeordnet ist oder die oder das sich an dem Endeffektor anordnen lässt, wobei am Endeffektor eine Kamera angeordnet ist und wobei der Bauroboter eingerichtet ist, das vorangehend beschriebene Verfahren auszuführen.

Dazu kann der Bauroboter eine Steuerung aufweisen. Die Steuerung kann auf einem Rechner implementiert sein. Der Rechner kann einen Prozessor und einen Speicher aufweisen. Der Speicher kann Programmcode umfassen, der auf dem Prozessor ausführbar ist. Der Programmcode kann eingerichtet sein, bei Ausführungen auf dem Prozessor den Bauroboter zusteuern, so dass dieser das vorangehend beschriebene Verfahren ausführt.

Eine vorteilhafte Weiterentwicklung des Bauroboters kann vorsehen, dass der Bauroboter eine Reinigungsvorrichtung zur Reinigung der Kamera aufweist. Die Reinigung des Vorrichtung kann beispielsweise einen Schlauch aufweisen. Der Schlauch kann mit einem Fluid, insbesondere Druckluft oder einem anderen Reinigungsfluid, beaufschlagbar sein. Der Schlauch kann zur Kamera führen, so dass beispielsweise Druckluft oder ein anderes Reinigungsfluid wie beispielsweise Wasser oder Wasser mit einem Reinigungsmittel, auf eine Sensoroberfläche der Kamera oder eine Linse der Kamera oder dergleichen zur Reinigung geblasen oder gesprüht werden kann.

Die Kamera kann in einem Schutzgehäuse angeordnet sein. Das Schutzgehäuse kann wenigstens der IP 44-Klasse entsprechen. Beispielsweise kann es der IP 67-Klasse entsprechen.

Besonders nützlich ist das vorangehend beschriebene Verfahren sowie der Bauroboter, wenn der Bauroboter für einen besonders großen Arbeitsbereich ausgelegt ist. Beispielsweise kann der Bauroboter einen Roboterarm mit einer maximalen Reichweite von wenigstens 2 m aufweisen. Bei solchen oder größeren Abmessungen können Störeinflüsse, beispielsweise Schwerkraftbedingte Störeinflüsse oder Vibrationen oder dergleichen, die Lokalisierung und damit einhergehend die Positioniergenauigkeit in Bezug auf die Arbeitsposition besonders beeinflussen. Können derartige Störeinflüsse minimiert werden, können somit auch Bauroboter mit einem großen Arbeitsbereich zur Ausführung von Bauarbeiten an der Arbeitsposition eingesetzt werden, selbst wenn diese Bauarbeiten eine besonders hohe Präzision erfordern. Durch Verwendung derartiger Bauroboter mit großen Arbeitsbereichen können wiederum Bauarbeiten großflächig mit besonders hoher Effizienz und dadurch besonders kostengünstig ausgeführt werden.

Eine Variante des Verfahrens stellt ein Verfahren zur Ausführung einer Bauarbeit an einer Arbeitsposition an einer Wand, einer Decke oder einem Boden durch einen Bauroboter, dar, bei dem ein Versatz zwischen der Kamera und wenigstens einem der Elemente aus der aus einer Werkzeugmaschine, einem Werkzeug und / oder einem Verbrauchsmaterial gebildeten Gruppe kalibriert wird und bei dem die Bauarbeit unter Verwendung des Elements ausgeführt wird. Diese Variante kann auch Merkmale der vorangehend beschriebenen Variante umfassen. Beispielsweise kann auch bei dieser Variante vorgesehen sein, die Kalibrierung mehrfach, insbesondere regelmäßig oder nach bestimmten Ereignissen, durchzuführen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: einen Bauroboter mit einer Kamera und einer Beleuchtungsvorrichtung;
- Fig. 2: einen Roboterarm des Bauroboters gemäß Fig. 1 mit der Kamera in einer Stellung, in der die Kamera im Wesentlichen senkrecht vor einer Wand angeordnet ist,
- Fig. 3: ein Flussdiagramm eines Verfahrens zur Ausführung einer Bauarbeit und
- Fig. 4: ein Flussdiagramm eines Verfahrens zur selbsttätigen Kalibrierung eines Versatzes.

In der nachfolgenden Beschreibung der Figuren werden zur Erleichterung des Verständnisses der Erfindung für gleiche oder sich funktional entsprechende Elemente jeweils die gleichen Bezugszeichen verwendet.

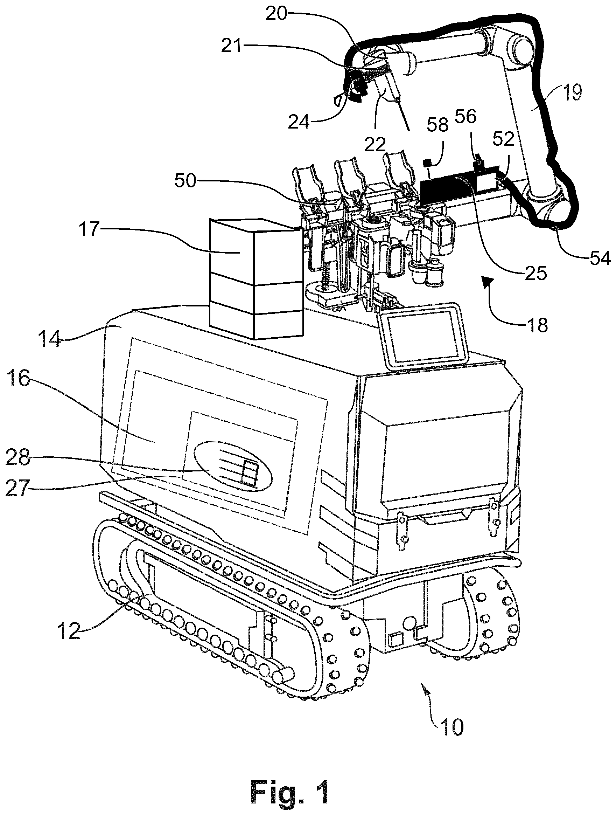

**Fig. 1** zeigt einen Bauroboter **10** mit einer als Kettenfahrwerk ausgebildeten Fahrplattform **12,** einem in einem Gehäuse **14** ausgebildeten Steuerraum **16** und einem oberseitig des Gehäuses 14 angeordneten Roboterarm **18.** Der Roboterarm 18 umfasst eine Hubvorrichtung **17** zur vertikalen Verlagerung und einen multiaxial steuerbaren Arm **19.** Insgesamt kann der Roboterarm 18 auf eine maximale Reichweite von mindestens 4 m ausgefahren werden, sodass unter Berücksichtigung der Maße der Fahrplattform 12 sowie des Gehäuses 14 Bauarbeiten in Höhen von bis zu wenigstens 4,5 m ausgeführt werden können.

Am freien Ende des Arms 19 befindet sich ein Endeffektor **20** mit einer Wechselschnittstelle **21.**

An der Wechselschnittstelle 21 ist eine Werkzeugmaschine **22** angeordnet. Die Werkzeugmaschine 22 ist in diesem Ausführungsbeispiel eine Setzwerkzeugmaschine in Form eines Schlagschraubers.

An der Wechselschnittstelle 21 befindet sich auch eine Kamera **24.**

Ferner weist der Bauroboter 10 eine Reinigungsvorrichtung **26** zur Reinigung der Kamera 24, insbesondere einer Sensoroberfläche der Kamera 24, auf. Die Reinigungsvorrichtung 26 umfasst unter anderem eine Blasvorrichtung **52,** um Druckluft durch einen Schlauch **54** zu treiben sowie einen Sprühkopf **56** und einen Wischer **58** als eine weitere Möglichkeit, die Kamera 24 oder zumindest einen Teil der Kamera 24 zu reinigen. Insbesondere kann der Roboterarm 18 gesteuert derart gesteuert werden, dass die Kamera 24 oder der Teil in einen Wirkbereich **60** der Reinigungsvorrichtung 26, d. h. in einen Bereich, in dem der Wischer 58 und der Sprühkopf 56 gleichzeitig oder unabhängig voneinander auf die Kamera 24 oder den Teil zur Reinigung einwirken können, gebracht werden. Die Kamera 24 oder der Teil können zunächst über dem Sprühkopf 56 entlanggeführt werden und dabei mit Reinigungsfluid besprüht werden. Anschließend kann die Kamera 24 oder der Teil mit Hilfe des Wischers 58 zusätzlich gereinigt und getrocknet werden.

Ferner weist der Bauroboter 10 eine im Steuerraum 16 angeordnete Steuerung **27** auf. Die Steuerung 27 umfasst eine Rechnereinheit mit einer Speichereinheit **28.**

Die Steuerung 27 ist mit ausführbarem Programmcode ausgestattet. Der Programmcode kann abrufbar in der Speichereinheit 28 gespeichert sein und kann auf der Rechnereinheit ausgeführt werden. Die Steuerung 27 ist mit Hilfe des Programmcodes eingerichtet, Bildaufnahmen der Kamera 24 auszuwerten. Insbesondere werden Verschmutzungen einer Sensoroberfläche der Kamera 24 detektiert. Die Steuerung 27 ist mit Hilfe des Programmcodes zudem eingerichtet, bei Detektion von Schmutz auf der Sensoroberfläche diese mit Hilfe der Reinigungsvorrichtung 26 zu reinigen.

Der Bauroboter 10 ist zur Ausführung von verschiedenen Bauarbeiten in Decken, Wänden oder Böden auf einer Baustelle, insbesondere auf einer Hochbau-Baustelle oder einer Tiefbau-Baustelle, ausgebildet. Um für die jeweiligen Bauarbeiten spezifische Werkzeugmaschinen und / oder Werkzeuge verwenden zu können, weist er einen Werkzeugwechsler **50** auf, in dem verschiedene Werkzeugmaschine und / oder Werkzeuge aufgenommen sein können. Der Bauroboter 10 ist zudem eingerichtet, eine Werkzeugmaschine und / oder ein Werkzeug auszuwählen und am Endeffektor 20 anzuordnen oder gegebenenfalls gegen ein dort bereits befindliches Werkzeug oder eine dort bereits befindliche Werkzeugmaschine zu tauschen.

Der Bauroboter 10, insbesondere der Roboterarm 18, kann noch weitere Vorrichtungen, beispielsweise ein Prisma, ein Farbsprühgerät, einen Distanzmesser, eine Positions- und / oder Lage-Bestimmungslogik, weitere Kameras und / oder dergleichen aufweisen, auch wenn diese aus Vereinfachungsgründen in Fig. 1 nicht dargestellt sind.

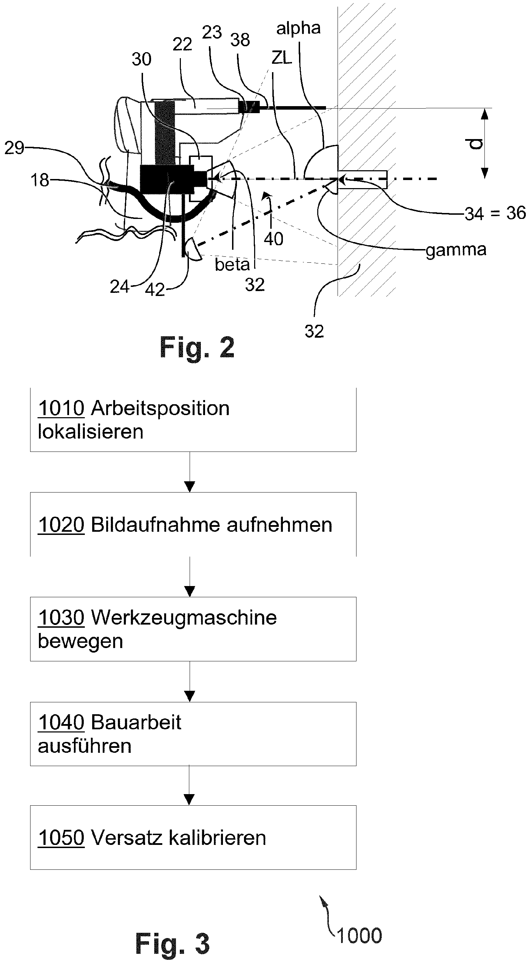

**Fig. 2** zeigt einen Ausschnitt des Bauroboters 10 aus Fig. 1. Zu erkennen ist der Roboterarm 18 mit dem Endeffektor 20, an dem die Werkzeugmaschine 22 sowie die Kamera 24 angeordnet sind. Die Kamera 24 ist durch ein Schutzgehäuse **30** geschützt. Das Schutzgehäuse 30 weist ein Schutzniveau von mindestens IP 67 auf. Es dient insbesondere zum Feuchtigkeitsschutz sowie zum Staubschutz der Kamera 24. Das Schutzgehäuse 30 ist aus einem transparenten, schlagfestem Kunststoff ausgebildet.

Der Schlauch 29 weist mit seinem freien Ende auf eine Außenseite **31** des Schutzgehäuse 30. Somit kann die Außenseite 31 des Schutzgehäuses 30, die eine Sensoroberfläche der Kamera 24 bildet, durch aus dem Schlauch 29 strömende Druckluft gereinigt werden. Dadurch - sowie bei Bedarf auch unter Nutzung der übrigen Komponenten der Reinigungsvorrichtung 26 (siehe Fig. 1) können Bildaufnahmen selbst bei hoher Schmutzbelastung, insbesondere hoher Staubbelastung, aufgenommen werden.

Die Kamera 24 ist senkrecht zu einer Wand **32** ausgerichtet. Insbesondere steht sie im Wesentlichen senkrecht über einem Bohrloch **34.** Das Bohrloch 34 bildet eine Arbeitsposition **36,** an der nachfolgend als Bauarbeit ein Anker **38** gesetzt werden soll. Dabei bedeutet im Wesentlichen senkrecht, dass die Kamera 24 in einem Sichtwinkel **alpha** im Bereich von 70 bis 110 Grad, in Fig. 2 beispielsweise 90 Grad, zur Oberfläche der Wand 32 ausgerichtet ist. Die Kamera 24 weist ein Sichtfeld **40** auf. Das Sichtfeld 40 weist einen Öffnungswinkel **beta** im Bereich von beispielsweise 20 Grad bis 80 Grad auf. Das Sichtfeld 40 resultiert dabei im Wesentlichen durch technische Gegebenheiten einer Linsengeometrie sowie der Geometrie einer Blende der Kamera 40 und kann somit als Parameter der Kamera 24 betrachtet werden.

In der Situation gemäß Fig. 2 ist zu erkennen, dass ein von der Kamera 24 aufgenommenes Bild, das den Inhalt des Sichtfeldes 40 wiedergibt, das Bohrloch 34 an einer exakt zentralen Position abbildet. Würde die Kamera 24 zwar weiterhin im Wesentlichen senkrecht über dem Bohrloch 34, jedoch mit einem von 90 Grad abweichenden Sichtwinkel alpha, stehen, so könnte dies anhand der Lage des Bohrlochs 34 innerhalb der aufgenommenen Bildaufnahme detektiert werden. Es genügt daher, dass die Kamera 24 auf eine erwartete Arbeitsposition, insbesondere in der Nähe der tatsächlichen Arbeitsposition 36, positioniert wird. Die erwartete Arbeitsposition kann beispielsweise einer vorangehend ausgemessenen Position entsprechend, an der vorausgehend eine andere Bauarbeit, hier insbesondere das Bohren des Bohrlochs 34, ausgeführt worden ist. Das Bohrloch 34 kann dadurch identifiziert werden, dass ein oder mehrere Ränder oder Kanten in der Bildaufnahme der Kamera 24 detektiert wird.

Dazu weist die Steuerung 27 (siehe Fig. 1) Programmcode zur deterministischen Analyse der Bildaufnahme, insbesondere zur Kantendetektion, auf.

Durch die senkrechte oder zumindest im Wesentlichen senkrechte Positionierung der Kamera 24 über dem Bohrloch 34 weisen Bildaufnahmen der Kamera 24 einen hohen Kontrast auf, der die Analyse der Bildaufnahme erleichtert.

Der Kontrast lässt sich noch durch Beleuchtung durch eine Beleuchtungsvorrichtung **42** weiter verbessern. Besonders bewährt hat sich, dass sich die Beleuchtungsvorrichtung 42 außerhalb einer Zentrallinie **ZL** des Bohrlochs 34, insbesondere seitlich und beabstandet von der Kamera 24, befindet. Die Arbeitsposition 36, hier also das Bohrloch 34, kann dadurch schräg, insbesondere unter einem Beleuchtungswinkel **gamma** von weniger als 70 Grad, beleuchtet werden. Der Rand des Bohrloches 34 kann sich somit mit besonders hohem Kontrast auf der Bildaufnahme der Kamera 24 abzeichnen.

Die Werkzeugmaschine 22 ist im vorliegenden Beispiel als Setzwerkzeugmaschine in Form eines Schlagschraubers ausgebildet. An der Werkzeugmaschine 22 ist ein Setzwerkzeug als Werkzeug **44** montiert. In der Situation gemäß Fig. 2 ist der in das Bohrloch 34 zu setzende Anker 38 bereits in dem Werkzeug 44 aufgenommen.

Um nun den Anker 38 in das Bohrloch 34 zu setzen, ist die Werkzeugmaschine 22 so zu bewegen, dass der Anker 38 möglichst präzise und zentriert über dem Bohrloch 34 steht, so dass der Anker 38 senkrecht zur Wand 32 in das Bohrloch 34 eingeführt werden kann.

Zwischen der Kamera 24 und der Werkzeugmaschine 22, insbesondere dem im Werkzeug 23 aufgenommenen Anker 38 besteht ein Versatz **d.**

**Fig. 3** beschreibt hierzu ein Verfahren **1000** zur Ausführung einer Bauarbeit, am Beispiel des Setzens des Ankers 38 an der Arbeitsposition 36, hier entsprechend der Position des Bohrlochs 34, an der Wand 32 durch den Bauroboter 10. Zur Erleichterung des Verständnisses wird im Folgenden werden die vorangehend eingeführten Bezugszeichen weiterverwendet.

Zunächst wird in einer Phase **1010** die Arbeitsposition 36, also die Position des Bohrlochs 34, lokalisiert. Dazu wird die Kamera 24 senkrecht über der erwarteten Arbeitsposition und damit zumindest im Wesentlichen senkrecht über der Arbeitsposition 36, positioniert. Im Ergebnis entspricht dies der in Fig. 2 dargestellten Situation.

Anschließend wird in einer Phase **1020** eine Bildaufnahme durch die Kamera 24 aufgenommen. Eine durch die Steuerung 27 gebildete Bildauswertungseinheit wertet die aufgenommene Bildaufnahme aus. Insbesondere detektiert sie Kanten. Unter Verwendung des Wissens, dass die zu ermittelnde Arbeitsposition 36 sich auf das Bohrloch 34 bezieht, kann aus den identifizierten Kanten, insbesondere aus einer identifizierten Lage eines Kreises, auf einen Zentrumspunkt beziehungsweise auf die Zentrallinie ZL des Bohrlochs 34 und damit auf die Position der Arbeitsposition 36 präzise geschlossen werden.

Zur Kantendetektion kann die Bildauswertungseinheit eine deterministische Bildauswertungslogik umfassen, um die Position der Arbeitsposition 36 möglichst präzise auf Basis der Bildaufnahme zu ermitteln. Bei einer Variante des Verfahrens wird mit Hilfe eines Maschinenlerners validiert, dass auch tatsächlich das korrekte Bildelement, also im Beispiel eine Abbildung eines Bohrlochs und insbesondere des Bohrlochs 34, untersucht wird. Im Falle, dass die Validierung fehlschlägt, kann eine Warnmeldung ausgegeben werden und / oder eine andere Position als erwartete Arbeitsposition verwendet werden, um das Verfahren 1000 neu durchzuführen.

Durch Untersuchung der relativen Lage der Zentrumslinie ZL beziehungsweise ihrer Punktprojektion innerhalb der Bildaufnahme kann auf einen Arbeitspositionen-Versatz der erwarteten Arbeitsposition zur tatsächlichen Arbeitsposition 36 geschlossen werden. In der Situation gemäß Fig. 2, in der die Arbeitsposition 36 der erwarteten Arbeitsposition entspricht, ist der Arbeitspositionen-Versatz dementsprechend 0.

Durch eine vorangehende Kalibrierung ist der Versatz **d** (siehe Fig. 2) der Kamera 24 zur Werkzeugmaschine 22 und damit zum Werkzeug 44 sowie zudem darin aufgenommenen Anker 38 bekannt. In Fig. 2 ist der Versatz d vereinfachend als eindimensionaler Versatz dargestellt. Denkbar ist, während der Kalibrierung einen zumindest zweidimensionalen Versatz d zu ermitteln.

In einer anschließenden Phase **1030** wird die Werkzeugmaschine 22 derart bewegt, dass unter Berücksichtigung des Versatzes d der Anker 38 exakt auf die Zentrallinie ZL ausgerichtet ist.

Nun wird in einer Phase **1040** die gewünschte Bauarbeit, hier das Setzen des Ankers 38, ausgeführt werden. Dazu steuert die Steuerung 27 die Werkzeugmaschine 22 mit Hilfe des übrigen Roboterarms 18 parallel zur Zentrallinie ZL auf die Arbeitsposition 36, also das Bohrloch 34, zu, bis der Anker 38 mit einer gewünschten Tiefe in die Arbeitsposition 36, also das Bohrloch 34, eingedrungen ist.

Durch Betätigen der Werkzeugmaschine 22 wird nun der Anker 38 im Bohrloch 34 verankert. Wenn der Anker 38 beispielsweise ein Bolzenanker ist, kann der Anker 38 dazu mit einem bestimmten Mindest-Drehmoment festgezogen werden.

Regelmäßig, beispielsweise nach einer bestimmten Anzahl von Setzvorgängen von Ankern entsprechend dem Anker 38, beispielsweise jeweils nach 100 Setzvorgängen, kann eine Variante des Verfahrens 1000 vorsehen, dass eine Kalibrierungsphase **1050** ausgeführt wird. In der Kalibrierungsphase 1050 wird der Versatz d kalibriert. Thermische Veränderungen, Abnutzungen, mechanische Verformungen und dergleichen können auf diese Weise kompensiert werden.

Alternativ oder ergänzend kann auch vorgesehen sein, nach Einlegen eines neuen Verbrauchsmaterials, also beispielsweise eines neuen Ankers, den Versatz d gemäß der Kalibrierungsphase 1050 zu kalibrieren.

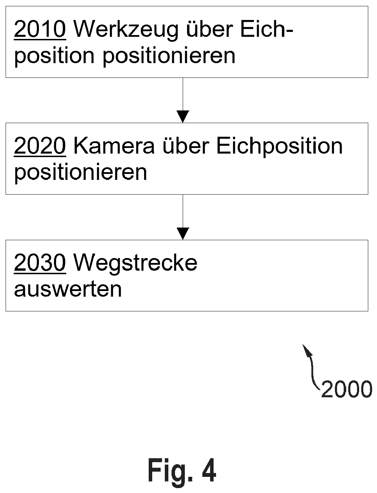

Anhand von **Fig. 4** wird nun ein Kalibrierungsverfahren **2000** näher erläutert, das während der Phase 1050 durchgeführt werden kann, um den Versatz d zu kalibrieren.

Zur Erläuterung des Verfahrens 2000 wird davon ausgegangen, dass eine Eichposition vorhanden ist, deren exakte Position beispielsweise optisch mit hoher Präzision bestimmbar ist. Die Eichposition kann vorzugsweise eine Markierung mit einem starken Kontrast aufweisen. Denkbar ist auch, insbesondere bei guten Lichtverhältnissen, als Eichposition eine frühere Arbeitsposition, beispielsweise ein Bohrloch wie dem Bohrloch 34, zu verwenden.

In einer Phase **2010** wird zunächst das später präzise zu positionierende Objekt, im vorangehenden Beispiel somit der Anker 38, in anderen Fällen beispielsweise das Werkzeug 44 oder die Werkzeugmaschine 22, über der Eichposition positioniert. Bei einer Variante des Verfahrens 2000 erfolgt dies manuell durch visuelle Kontrolle eines Benutzers. Bei einer alternativen Variante des Verfahrens 2000 erfolgt dies selbsttätig durch den Bauroboter 10. Denkbar ist dazu beispielsweise, dass das zu positionierende Objekt so lange unter visueller Kontrolle durch eine oder mehrere Kameras, beispielsweise durch die Kamera 24, bewegt wird bis sich das Objekt tatsächlich oder zumindest mit einer ausreichend hohen Wahrscheinlichkeit und mit ausreichender Präzision senkrecht über der Eichposition befindet.

Nun wird in einer anschließenden Phase **2020** die Kamera 24 anstelle des Objekts über der Eichposition positioniert. Diese Positionierung der Kamera 24 kann vorzugsweise mit einer ähnlichen oder einer höheren Präzision erfolgen als die vorangehende Positionierung des Objekts. Die Positionierung kann durch visuelle Kontrolle mithilfe der Kamera 24 und / oder weiterer Kameras erfolgen. Die von der Kamera 24 zurückgelegte Wegstrecke wird aufgezeichnet. Üblicherweise weisen Roboterarme Wegsensoren auf, deren Messsignale zur Aufzeichnung verwendet werden können. Fehler in diesen Messsignalen können kompensiert werden, wenn das Verfahren 2000 mehrfach, beispielsweise ausgehend von verschiedenen Anfangspositionen und / oder Anfangslagen der Kamera 24 und / oder des Objekts ausgeführt wird und die Einzelergebnisse gemittelt werden.

Die auf diese Weise ermittelte zurückgelegte Wegstrecke kann nun in einer Phase **2030** ausgewertet werden, um daraus den Versatz d zu ermitteln. Insbesondere entspricht der Versatz d dem Differenzvektor zwischen dem Anfangspunkt der Wegstrecke und ihrem Endpunkt.

### Bezugszeichenliste

- 10: Bauroboter
- 12: Fahrplattform
- 14: Gehäuse
- 16: Steuerraum
- 17: Hubvorrichtung
- 18: Roboterarm
- 19: Arm
- 20: Endeffektor
- 21: Wechselschnittstelle
- 22: Werkzeugmaschine
- 24: Kamera
- 26: Reinigungsvorrichtung
- 27: Steuerung
- 28: Speichereinheit
- 30: Schutzgehäuse
- 31: Außenseite
- 32: Wand
- 34: Bohrloch
- 36: Arbeitsposition
- 38: Anker
- 40: Sichtbereich
- 42: Beleuchtungsvorrichtung
- 44: Werkzeug
- 50: Werkzeugwechsler
- 52: Blasvorrichtung
- 54: Schlauch
- 56: Sprühkopf
- 58: Wischer
- 60: Wirkbereich
- 1000: Verfahren
- 1010: Phase
- 1020: Phase
- 1030: Phase
- 1040: Phase
- 1050: Kalibrierungsphase
- 2000: Kalibrierungsverfahren
- 2010: Phase
- 2020: Phase
- 2030: Phase
- 2040: Phase
- alpha: Sichtwinkel
- beta: Öffnungswinkel
- gamma: Beleuchtungswinkel
- d: Versatz
- ZL: Zentrallinie

## Patentansprüche

1. Verfahren (1000) zur Ausführung einer Bauarbeit an einer Arbeitsposition (36) an einer Wand (32), einer Decke oder einem Boden durch einen Bauroboter (10), umfassend die Phasen (1000, 1010, 1020, 1030, 1040, 1050):
- Lokalisieren einer Arbeitsposition (36), wobei dazu eine Kamera (24) im Wesentlichen senkrecht, insbesondere mit einem Sichtwinkel (alpha) von 70 bis 110 Grad, über der Arbeitsposition (36) oder zumindest über einer zur Arbeitsposition (36) korrespondierenden, erwarteten Arbeitsposition (36) positioniert wird,
- Aufnehmen wenigstens einer Bildaufnahme der Arbeitsposition (36) durch die Kamera (24),
- Bewegen wenigstens eines Elements aus einer Gruppe gebildet aus einer Werkzeugmaschine (22), einem Werkzeug (44) und / oder einem Verbrauchsmaterial an die Arbeitsposition (36) und
- Ausführen der Bauarbeit an der Arbeitsposition (36) unter Verwendung des Elements.

2. Verfahren (1000) nach Patentanspruch 1, **dadurch gekennzeichnet, dass** die Kamera (24) oder ein Teil der Kamera (24), insbesondere ein Schutzgehäuse (30), gereinigt wird.

3. Verfahren (1000) nach einem der vorhergehenden Patentansprüche, **dadurch gekennzeichnet, dass** eine Beleuchtungsvorrichtung (42) die Arbeitsposition (36) oder der erwarteten Arbeitsposition (36) unter einem vom Sichtwinkel (alpha) der Kamera (24) verschiedenen Beleuchtungswinkel (gamma), insbesondere mit einem Beleuchtungswinkel (gamma) unter 70 Grad, insbesondere von höchstens 60 Grad, beleuchtet.

4. Verfahren (1000) nach einem der vorhergehenden Patentansprüche, **dadurch gekennzeichnet, dass** die Bildaufnahme mit Hilfe einer deterministischen Bildverarbeitungslogik ausgewertet wird.

5. Verfahren (1000) nach einem der vorhergehenden Patentansprüche, **dadurch gekennzeichnet, dass** die Bildaufnahme mit Hilfe eines Maschinenlerners ausgewertet wird.

6. Verfahren (1000) nach einem der vorhergehenden Patentansprüche, **dadurch gekennzeichnet, dass** ein Versatz (d) zwischen der Kamera (24) und dem Element, insbesondere regelmäßig nach einer bestimmten Mindest- oder Höchstanzahl von bearbeiteten Arbeitsposition (36), kalibriert wird und / oder sich selbst kalibriert.

7. **Bauroboter (10)** zur Ausführung von Bauarbeiten, beispielsweise auf einer Hochbau-Baustelle oder einer Tiefbau-Baustelle, umfassend eine Fahrplattform (12) sowie einen an der Fahrplattform (12) angeordneten Roboterarm (18), wobei der Roboterarm (18) einen Endeffektor (20) aufweist, an dem eine Werkzeugmaschine (22) mit einem Werkzeug (44) und / oder einem Verbrauchsmaterial angeordnet ist oder die oder das sich an dem Endeffektor (20) anordnen lässt, wobei am Endeffektor (20) eine Kamera (24) angeordnet ist und wobei der Bauroboter (10) eingerichtet ist, das Verfahren (1000) nach einem der vorhergehenden Patentansprüche auszuführen.

8. Bauroboter (10) nach dem vorhergehenden Patentanspruch, **dadurch gekennzeichnet, dass** der Bauroboter (10) eine Reinigungsvorrichtung (26), beispielsweise einen mit Druckluft beaufschlagbaren Schlauch (54), zur Reinigung der Kamera (24) aufweist.

9. Bauroboter (10) nach einem der beiden vorhergehenden Patentansprüche, **dadurch gekennzeichnet, dass** die Kamera (24) in einem Schutzgehäuse (30) angeordnet ist.

10. Bauroboter (10) nach einem der Patentansprüche 7 bis 9, **dadurch gekennzeichnet, dass** der Roboterarm (18) eine maximale Reichweite von wenigstens 2 m aufweist.
